**Europäisches Patentamt**

**European Patent Office**

**Office européen des brevets**

(19)

(11) Veröffentlichungsnummer: **0 199 895**
**B1**

# (12) EUROPÄISCHE PATENTSCHRIFT

(45) Veröffentlichungstag der Patentschrift:
23.08.89

(21) Anmeldenummer: 86101109.6

(22) Anmeldetag: 28.01.86

(51) Int. Cl.⁴: **B 60 T 7/20**

(54) **Druckmittel-Bremsanlage für den Anhänger eines Fahrzeuges.**

(30) Priorität: 25.04.85 DE 3514949

(43) Veröffentlichungstag der Anmeldung:
05.11.86 Patentblatt 86/45

(45) Bekanntmachung des Hinweises auf die Patenterteilung:
23.08.89 Patentblatt 89/34

(84) Benannte Vertragsstaaten:
DE FR GB IT SE

(56) Entgegenhaltungen:
DE-A-3 207 793

(73) Patentinhaber: **WABCO Westinghouse Fahrzeugbremsen GmbH, Am Lindener Hafen 21 Postfach 91 12 80, D-3000 Hannover 91 (DE)**

(72) Erfinder: **Rothen, Johann, Dipl.- Ing., Otto-Lilienthal- Strasse 7, D-3203 Sarstedt (DE)**
Erfinder: **Schult, Manfred, Dr.- Ing., Carl-Zuckmayer- Strasse 4, D-3008 Garbsen 8 (DE)**

(74) Vertreter: **Schrödter, Manfred, WABCO Westinghouse Fahrzeugbremsen GmbH Am Lindener Hafen 21 Postfach 91 12 80, D-3000 Hannover 91 (DE)**

EP 0 199 895 B1

LIBER, STOCKHOLM 1989

## Beschreibung

Die Erfindung betrifft eine Druckmittel-Bremsanlage für den Anhänger eines Fahrzeuges gemäß dem Oberbegriff des Patentanspruchs 1.

Eine derartige Anlage ist durch die DE-OS-3 207 793 vorbekannt. Diese vorbekannte Anlage wird sowohl pneumatisch als auch elektrisch angesteuert. Die pneumatische Ansteuerung erfolgt vom Bremskreis des Motorwagens über eine kuppelbare Anhängerbremsleitung, die mit dem Steuereingang eines Anhängerbremsventils verbunden ist. Zu der pneumatischen Bremskraftregelung der Anhängerbremse parallel geschaltet, erfolgt die elektrische Ansteuerung über einen Drucksensor, der den Bremssteuerdruck in der Anhängerbremsleitung mißt. Der von dem Drucksensor in ein elektrisches Signal umgewandelte Bremsdruck wird elektrisch regelbaren Drucksteuerventilen, die den Bremszylindern zugeordnet sind, zugeleitet. Dieses elektrische Signal kann mittels einer elektronischen Steuerinheit im Anhängerbremssystem durch elektrische Signale von Achslast und/oder Raddrehzahlsensoren modifiziert werden. Darüberhinaus kann über eine zusätzliche, elektrische Leitung dem Anhängerbremskreis ein elektrisches Steuersignal übermittelt werden, welche z. B. am Zugwagen-Bremspedal erzeugbar wäre.

Trotz der erwähnten Arten der elektrischen Ansteuerung des Anhängerbremskreises kann bei dieser Anlage auf die Möglichkeit einer redundanten pneumatischen Übertragung des Bremsdruckes nicht verzichtet werden, weil bei einer Unterbrechung der elektrischen Versorgung, z. B. bei Trennung des Anhängers vom Zugwagen, oder während der Parkstellung des Zugwagens mit angekoppeltem Anhänger, die elektrische Anlage wirkungslos wäre. Die Bremsung des Anhängers erfolgt in diesen Fällen über den pneumatischen Bremskreis, in dem bei einer Entlüftung der Anhängerbrems- und/oder Anhängervorratsleitung von der Vorratsbehälter des Anhängers über das umgeschaltete Anhängerbremsventil eine Belüftung der Bremszylinder, d. h. ein Festsetzung des Bremsen des Anhängers erfolgen kann.

Ein Festsetzen der Bremsen bei elektrisch unversorgtem Anhängerbremskreis etwa in der Art, daß dann die Drucksteuerventile den Vorratskreis mit den Bremszylindern verbinden würden, hätte während der Fahrt ein unerwünschtes, schlagartiges Einbremsen des Anhängers zur Folge. Eine, für diesen speziellen Fall herabgesetzte Bremswirkung, z. B. durch den Einsatz einer Drossel zwischen den Drucksteuerventilen und den Bremszylinder wäre unzulässig, weil dann auch die Betriebsbremsung gedrosselt erfolgen würden.

Der Erfindung liegt daher die Aufgabe zugrunde, eine Bremsanlage der eingangs erwähnten Art so zu verbessern, daß bei Ausbleiben der elektrischen Brems- bzw. Steuersignale des Zugwagens und/oder der Stromversorgung des Angängers vom Zugwagen aus die Bremsen des Anhängers in Bremsstellung sind.

Diese Aufgabe wird durch die im Patentanspruch 1 angegebene Erfindung gelöst. Weiterbildungen und vorteilhafte Ausführungsbeispiele sind in den Unteransprüchen angegeben.

Die Erfindung hat den Vorteil, daß auch bei einer elektrischen Anhängerbremsanlage ohne pneumatische Bremsleitung zwischen Zugwagen und Angänger eine automatische Einbremsung des Anhängers erfolgt, wenn die elektrische Verbindung zwischen Zugwagen und Anhänger melden und auf dem Anhänger ausgewertet werden.

Für den Fall, daß die elektrische Stromversorgung der Anhängerbremsanlage von einer auf dem Anhänger angeordneten Stromquelle (Batterie) erfolgt, können über die zwischen Zugwagen und Anhänger angeordnete Signalleitung auch Steuersignale gegeben werden, die die elektrische Verbindung zwischen Zugwagen und Anhänger melden und auf dem Anhänger ausgewertet werden.

Die Erfindung wird anhand eines Ausführungsbeispiels, das in der Zeichnung dargestellt ist, näher erläutert. Es zeigen:

Fig. 1 ein Schaltschema einer elektrisch gesteuerten Anhängerbremsanlage mit einer Schalteinrichtung, die einen elektrischen- und einen pneumatischen Steuereingang aufweist.

Fig. 2 ein Schaltschema gemäß Fig. 1, mit einer Schalteinrichtung, die einen elektrischen Steuereingang und einen Druckschalter aufweist.

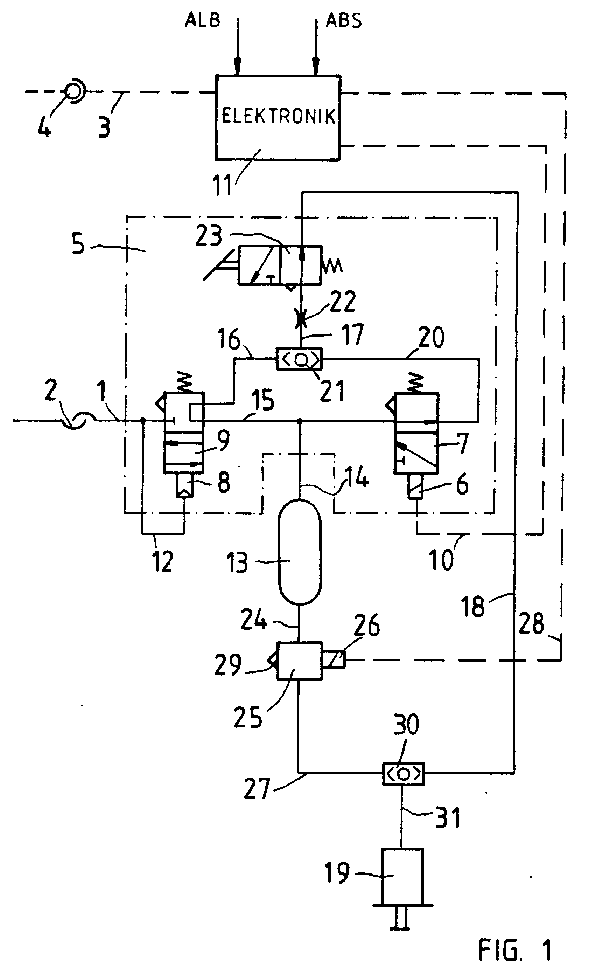

Die Fig. 1 zeigt einen Druckmittelvorratskreis und einen elektrischen Bremskreis einer Anhängerbremsanlage. Der Druckmittelvorratskreis ist über eine Druckmittelleitung 1 und eine Leitungskupplung 2 mit dem Druckmittelvorratskreis des Zugwagens verbunden. Der elektrische Bremskreis des Anhängers ist über eine elektrische Signalleitung 3 und eine elektrische Kupplung 4 mit dem, elektrische Bremssignale aussteuernden Bremssystem des Zugwagens verbunden. Der elektrische Teil des Anhängerbremssystems wird von einer elektrischen Energiequelle des Zugwagens versorgt. Eine Ventilschalteinrichtung 5 mit einem elektrischen Steueranschluß 6 eines Wegeventils 7 und einem pneumatischen Steueranschluß 8 eines Wegeventils 9 ist in dem pneumatischen Druckmittelvorratskreis angeordnet. Der elektrische Steueranschluß 6 ist über eine elektrische Leitung 10 mit einer elektronischen Steuerinheit 11 verbunden, die über die elektrische Signalleitung 3 mit dem elektrische Bremssignale aussteuernden Bremssystem und der elektrischen Versorgung des Zugwagens verbunden ist. Der pneumatische Steueranschluß 8 ist über Druckmittelleitungen 12, 1 mit dem Druckmittelvorratskreis des Zugwagens verbunden.

Das Wegeventil 9 verbindet bei drucklosem Steueranschluß 8 einen im pneumatischen Druckmittelvorratskreis angeordneten Vorratsbehälter 13 über Leitungen 14, 15, 16, 17, 18 mit einem Bremszylinder 19, der hier symbolisch für alle übrigen Bremszylinder des Anhängers dargestellt ist. Bei druckbeaufschlagtem Steueranschluß 8 verbindet das Wegeventil 9 den Druckmittelvorratskreis des Zugwagens über die Leitungen 1, 15, 14 mit dem Vorratsbehälter 13. Die Leitung 16 ist dann in die Atmosphäre entlüftet.

Das Wegeventil 7 verbindet bei stromlosem Steueranschluß 6 den Vorratsbehälter 13 über die Leitungen 14, 15, 20, 17, 18 mit dem Bremszylinder 19. Bei stromführendem Steueranschluß ist die Verbindung vom Vorratsbehälter 13 zum Bremszylinder 19 gesperrt. Die Leitung 20 ist dann in die Atmosphäre entlüftet.

Ein zwischen den Leitungen 16 und 20 angeordnetes Wechselventil 21, in der Art eines doppelseitig wirkenden Rückschlagventils, verbindet jeweils die druckführende Leitung, oder beide druckführenden Leitungen 16, 20 mit der Leitung 17. Eine in der Leitung 17 angeordnete Drossel 22 drosselt die Zufuhr des Druckmittels über die Leitung 18 zum Bremszylinder 19.

Ein zwischen den Leitungen 17 und 18 angeordnetes, manuell betätigbares Wegeventil 23 verbindet je nach Schaltstellung die Leitungen 17 und 18, oder sperrt die Leitung 17 und verbindet die Leitung 18 mit der Atmosphäre.

Der Vorratsbehälter 13 ist über eine Leitung 24 mit einem Drucksteuerventil 25 verbunden, daß über eine Leitung 27 mit dem Bremszylinder 19 verbunden ist. Das Drucksteuerventil 25 weist einen elektrischen Steueranschluß 26 auf, über den ein von der elektronischen Steuereinheit 11 über die elektrische Leitung 28 ausgesteuertes Bremssignal in einen vom Druckregelventil 25 ausgesteuerten Druck des dem Bremszylinder 19 über die Leitung 27 zuführbaren Druckmittels umsetzbar ist. In stromlosem Zustand des Steueranschlusses 26 ist der Bremszylinder 19 über die Leitung 27 mit einem Auslaß 29 des Drucksteuerventils 25 mit der Atmosphäre verbunden. Die vom Vorratsbehälter kommende Leitung 24 ist dann gegen die Leitung 27 abgesperrt.

Ein zwischen den Leitungen 27 und 18 angeordnetes, doppelseitig wirkendes Rückschlagventil 30 verbindet jeweils die druckführende Leitung 27 oder 18 über eine Leitung 31 mit dem Bremszylinder 19. Der Bremszylinder 19 ist entweder über die Leitungen 31, 27 und das Drucksteuerventil 25 oder über die Leitungen 31, 18 und die Ventilschalteinrichtung 5 in die Atmosphäre entlüftbar.

Die von der elektronischen Steuereinheit 11 auf den Steueranschluß 26 des Drucksteuerventils 25 übertragenen Bremssignale sind durch lastabhängige und/oder drehzahlabhängige Signale des Anhängers, die der elektronischen Steuereinheit 11 zuführbar sind, modifizierbar. Der von der Steuereinheit 11 mit einem Schaltstrom versorgte Steueranschluß 6 des Wegeventils 7 ist je nach Betriebszustand des Anhängers entweder unter Strom oder stromlos.

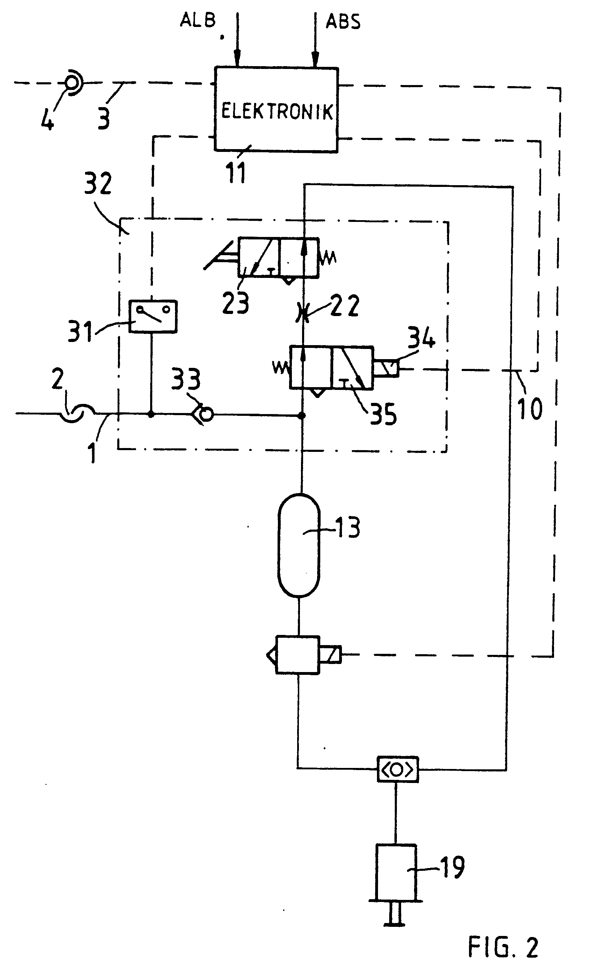

In Fig. 2 ist eine Ventilschalteinrichtung 32 gezeigt, die sich von der in Fig. 1 dargestellten Ventilschalteinrichtung 5 dadurch unterscheidet, daß das pneumatisch steuerbare Wegeventil 9 durch einen pneumatisch/elektrischen Schalter 31 in Kombination mit einem Rückschlagventil 33 verwendet wird. Der Schalter 31 reagiert auf einen in der Druckmittelleitung 1 vorhandenen Vorratsdruck derart, daß der elektronischen Steuereinheit 11 ein elektrisches Signal zugeführt wird. Von der elektronischen Steuereinheit 11 wird dann über die elektrische Leitung 10 ein elektrischer Strom auf den elektrischen Steueranschluß 34 eines Wegeventils 35 geleitet, wodurch das Wegeventil 35 eine Schaltstellung einnimmt, bei der die Verbindung vom Vorratsbehälter 13 zum Bremszylinder 19, wie unter Fig. 1 beschrieben, gesperrt ist. Das Rückschlagventil 33 sichert bei gelöster Kupplung 2 oder in der Parkstellung des Zugwagens den Druckmittelvorratskreis des Anhängers gegen die Atmosphäre ab.

Die elektronische Steuereinheit 11 weist eine Überwachungsschaltung auf, über die der Steuereingang 6, 34 der Ventilschalteinrichtung 5, 32 mit der elektrischen Signalleitung 3 und/oder mit der elektrischen Versorgungsleitung verbunden ist.

Die Wirkungsweise der Anlage gemäß Fig. 1 ist wie folgt:

Im Fahrbetrieb ist das Bremssystem des Anhängers über die Kupplung 2 und 4 mit dem Bremssystem des Zugwagens verbunden. Bei dem in der Leitung 1 herrschenden Vorratsdruck nimmt das Wegeventil 9 eine Schaltstellung ein, bei der der Vorratsbehälter 13 über die Leitungen 1, 15, 14 mit einem vorgegebenen Vorratsdruck aufgefüllt wird. Von der elektronischen Steuereinheit 11 wird dem Steueranschluß 6 des Wegeventils 7 ein Strom zugeführt, wodurch das Wegeventil 7 eine Schaltstellung einnimmt, bei der die Leitung 15 gegen die Leitungen 20, 17, 18 abgesperrt ist.

Der elektronischen Steuereinheit 11 werden vom Bremssystem des Zugwagens Bremssignale zugeführt, die als Bremsstrom über die Leitung 28 und den Steueranschluß 26 das Drucksteuerventil 25 veranlassen, vom Vorratsbehälter 13 über die Verbindung 24, 27, 30, 31 dem Bremszylinder 19 einen entsprechend geregelten Bremsdruck zuzuführen. Die Leitungen 16, 17, 20 sind im Fahrbetrieb über die Wegeventile 7 und 9 mit der Atmosphäre verbunden.

Bei einer Lösung der Kupplung 2 werden die Leitungen 1 und 12 in die Atmosphäre entlüftet. Das Wegeventil 9 nimmt daraufhin eine Schaltstellung ein, bei der der Vorratsbehälter 13 über die Verbindung 14, 15, 9, 16, 21, 17, 23, 18, 30, 31 mit dem Bremszylinder 19 verbunden ist.

Bei einer Lösung der Kupplung 4, d. h. bei Unterbrechung des vom Zugwagen ausgesteuerten Bremssignals und/oder bei Unterbrechung der vom Zugwagen dem Anhänger zugeführten elektrischen Versorgung wird dem Steueranschluß 6 des Wegeventils 7 der von der elektronischen Steuerinheit zugeführte Strom entzogen. Das Wegeventil 7 nimmt dann eine Schaltstellung ein, bei der der Vorratsbehälter 13 über die Verbindung 14, 15, 7, 20, 21, 17, 23, 18, 30, 31 mit dem Bremszylinder 19 verbunden ist.

In beiden Fällen, d. h. bei Lösung der Kupplungen 2 oder 4 werden durch die Verbindung des Vorratsbehälters 13 mit dem Bremszylinder 19 die Bremsen des Anhängers festgesetzt. Dies geschieht auch, wenn beide Kupplungen 2 und 4 gelöst sind, da dann der Vorratsbehälter 13 über die Verbindung 14, 15, 16 sowie 20, 21 und 17, 18, 30, 31 mit dem Vorratsbehälter 19 verbunden ist.

Die in der Leitung 17 angeordnete Drossel 22 verzögert den Druckaufbau im Bremszylinder 19. Dadurch wird vermieden, daß während der Fahrt bei einem Versorgungsausfall des Anhängers durch den Zugwagen eine schlagartige Einbremsung des Anhängers erfolgt.

In Parkstellung, d. h. bei ungelösten Kupplungen 2 und 4, aber bei stillgesetztem Zugwagen sind die Bremsen des Anhängers ebenfalls festgesetzt, wenn keine elektrische Versorgung vom Zugwagen her erfolgt.

Gemäß Fig. 2 werden die Bremsen des Anhängers in den beschriebenen Betriebszuständen ebenfalls festgesetzt. Dies geschieht bei einer Entlüftung der Leitung 1 dadurch, daß der elektrische Schalter 31 die Signalzufuhr zur elektronischen Steuereinheit 11 unterbricht und damit der Steueranschluß 34 des Wegeventils 35 stromlos wird. Das Wegeventil 35 nimmt dann eine Schaltstellung ein, bei der der Vorratsbehälter 13 mit dem Bremszylinder 19 verbunden ist.

Bei Unterbrechung des vom Zugwagen ausgesteuerten Bremssignals bzw. bei Ausbleiben der elektrischen Versorgung durch den Zugwagen wird der Steueranschluß 34 des Wegeventils 35 ebenfalls stromlos.

Die durch die Ventile 7, 9, 35 festgesetzten Bremsen können durch eine manuelle Betätigung des Wegeventils 23 gelöst werden. Der Bremszylinder 19 wird dadurch über die Verbindung 31, 30, 18, 23 in die Atmosphäre entlüftet. Der Anhänger ist dann in abgekoppeltem Zustand rangierbar.

## Patentansprüche

1. Druckmittelbremsanlage für den Anhänger eines Fahrzeuges mit folgenden Merkmalen:

a) es ist ein mit einem Druckmittel-Vorratsbehälter (13) ausgestatteter Anhänger-Vorratskreis vorgesehen, der über eine Druckmittelleitung und eine entsprechende Druckmittelkupplung (2), mit dem Druckmittel-Vorratskreis eines Zugwagen-Bremssystems verbindbar ist;

b) es ist ein elektrischer Anhänger-Bremskreis vorgesehen, der über eine elektrische Signalleitung (3) und eine entsprechende Kupplung (4), und/oder eine elektrische Versorgungsleitung und eine entsprechende Kupplung mit dem elektrische Bremssignale aussteuernden Bremssystem des Zugwagens verbindbar ist;

c) in dem elektrischen Anhänger-Bremskreis ist eine elektronische Steuereinheit (11), zur Steuerung des Bremsdruckes mittels einer elektrisch steuerbaren Drucksteuerventileinrichtung (25) vorgesehen;

d) es sind den Radbremsen zugeordnete Bremszylinder (19) vorgesehen, die über die Drucksteuerventileinrichtung des Anhänger-Bremskreises in die Atmosphäre entlüftbar sind;

e) es ist eine Ventilschalteinrichtung (5, 32), vorgesehen, die im Druckmittel-Vorratskreis des Anhängers angeordnet ist und über die der Druckmittel-Vorratsbehälter des Anhänger-Vorratskreises mit den Radbremszylindern verbindbar ist;

f) die Ventilschalteinrichtung ist über die Druckmittelleitung mit dem Druckmittel-Vorratskreis des Zugwagens verbindbar;

g) die Ventilschalteinrichtung verbindet bei einer Trennung des Anhänger-Bremssystems vom Druckmittel-Vorratskreis des Zugwagens den Druckmittel-Vorratsbehälter des Anhänger-Vorratskreises mit den Radbremszylindern;

gekennzeichnet durch folgende Merkmale:

h) ein Steuereingang (6, 34) der Ventileinrichtung (5, 32) ist über eine Überwachungsschaltung mit der elektrischen Signalleitung (3) und/oder mit der Versorgungsleitung verbunden;

i) die Ventilschalteinrichtung (5, 32) verbindet bei einer Unterbrechung der Signalleitung (3) bzw. einer Unterbrechung der Bremssignale und/oder bei einer Unterbrechung der Versorgungsleitung bzw. einer Unterbrechung der elektrischen Versorgung den Druckmittel-Vorratsbehälter (13) des Anhänger-Vorratskreises mit den Bremszylindern des Anhängers.

2. Druckmittelbremsanlage nach Anspruch 1, gekennzeichnet durch folgende Merkmale:

a) zum Erkennen der zwischen dem Zugwagen und dem Anhänger vorhandenen oder nicht vorhandenen elektrischen Brems-Steuersignale bzw. der elektrischen Versorgung weist die Ventilschalteinrichtung (5, 32) einen Steueranschluß (6, 34) auf, der elektrisch aussteuerbar ist;

b) der Steueranschluß (6, 34) ist über eine elektrische Leitung (10) und der Überwachungsschaltung mit der elektrischen Signalleitung (3) und/oder der Versorgungsleitung verbunden.

3. Druckmittelbremsanlage nach Anspruch 1, dadurch gekennzeichnet, daß die Ventilschalteinrichtung (32) einen Druckschalter (31) aufweist, der bei einem vorgegebenen Druck in der Druckmittelleitung (1) ein elektrisches Signal auf die elektronische Steuereinheit (11) übertragen kann.

4. Druckmittelbremsanlage nach Anspruch 1, dadurch gekennzeichnet, daß die Ventilschalteinrichtung (5, 32) eine Drossel (22) aufweist, durch die der von dem Druckmittel-Vorratsbehälter (13) über die Ventilschalteinrichtung (5, 32) den Radbremszylindern zuführbare Druckmittelstrom drosselbar ist.

5. Druckmittelbremsanlage nach Anspruch 1, dadurch gekennzeichnet, daß die Ventilschalteinrichtung (5, 32) ein manuell betätigbares Wegeventil (23) aufweist, das in einer ersten Schaltstellung einen Durchgang von der Ventilschaltienrichtung (5, 32) zu den Radbremszylindern freigibt, und in einer zweiten Schaltstellung die Radbremszylinder mit der Atmosphäre verbindet.

6. Druckmittelbremsanlage nach Anspruch 1, dadurch gekennzeichnet, daß die Ventilschalteinrichtung (32) ein Rückschlagventil (33) aufweist, das den Vorratskreis des Anhängers gegenüber dem Vorratskreis des Zugwagens oder der Atmosphäre absichert.

7. Druckmittelbremsanlage nach Anspruch 1, gekennzeichnet durch folgende Merkmale:

a) die Ventilschalteinrichtung (5) weist ein pneumatisches Wechselventil (21) auf, das mit einem ersten Eingang über ein pneumatisch steuerbares Wegeventil (9), und mit einem zweiten Eingang über ein elektrisch steuerbares Wegeventil (7) mit dem Druckmittelvorratsbehälter (13) verbindbar ist;

b) das Wechselventil (21) weist einen Ausgang auf, der über das manuell betätigbare Wegeventil (23) mit dem Bremszylinder (19) verbindbar ist.

8. Druckmittelbremsanlage nach Anspruch 7, dadurch gekennzeichnet, daß das Wegeventil (9) bei druckbeaufschlagtem Steueranschluß (8) den Druckmittelvorratskreis des Zugwagens mit dem Druckmittelvorratsbehälter (13) und bei drucklosem Steueranschluß (8) den Druckmittel-Vorratsbehälter (13) mit dem Bremszylinder (19) verbindet.

9. Druckmittelbremsanlage nach Anspruch 1, dadurch gekennzeichnet, daß die Ventilschalteinrichtung (5) ein Wegeventil (7) mit dem elektrischen Steueranschluß (6) aufweist, das bei stromlosem Steueranschluß (6) den Druckmittel-Vorratsbehälter (13) mit dem Bremszylinder (19) und bei stromführendem Steueranschluß (6) den Bremszylinder (19) mit der Atmosphäre verbindet.

10. Druckmittelbremsanlage nach den Ansprüchen 3 und 6, dadurch gekennzeichnet, daß die Ventilschalteinrichtung (32) ein Wegeventil (35) mit dem elektrischen Steueranschluß (34) aufweist, das bei stromlosem Steueranschluß (34) den Druckmittel-Vorratsbehälter (13) mit dem Bremszylinder (19) verbindet, und bei stromführendem Steueranschluß (34) diese Verbindung sperrt.

## Claims

1. A pressure medium brake system for the trailer of a vehicle having the following features:

a) a trailer supply circuit equipped with a pressure medium reservoir (13) is provided, which circuit can be connected hy way of a pressure medium line and a corresponding pressure medium coupling (2) to the pressure medium supply circuit of a trailer vehicle brake system;

b) an electrical trailer brake circuit is provided, which circuit can be connected by way of an electrical signal line (3) and a corresponding coupling (4) and/or an electrical energy supply line and a corresponding coupling to the brake system of the towing vehicle controlling electrical brake signals;

c) in the electrical trailer brake circuit there is provided an electronic control unit (11) for controlling the brake pressure by means of an electrically controllable pressure control valve arrangement (25);

d) brake cylinders (19) allocated to the wheel brakes are provided, which can he ventilated to the atmosphere through the pressure control valve arrangement of the trailer brake circuit;

e) a valve switching arrangement (5, 32) is provided, which is arranged in the pressure medium supply circuit of the trailer and by means of which the pressure medium reservoir of the trailer supply circuit can be connected to the wheel brake cylinders;

f) the valve switching arrangement can be connected by way of the pressure medium line to the pressure medium supply circuit of the towing vehicle;

g) the valve switching arrangement connects the pressure medium reservoir of the trailer supply circuit to the wheel brake cylinders on disconnection of the trailer brake system from the pressure medium supply circuit of the towing vehicle;

characterized by the following features:

h) a control input (6, 34) of the valve arrangement (5, 32) is connected by way of a monitoring circuit to the electrical signal line (3) and/or to the supply line;

i) on interruption of the signal line (3) or on interruption of the brake signals and/or on interruption of the supply line or on interruption of the electrical energy supply, the valve switching arrangement (5, 32) connects the pressure medium reservoir (13) of the trailer supply circuit to the brake cylinders of the trailer.

2. A pressure medium brake system according to claim 1, characterized by the following features:

a) to recognize the presence or absence of electrical brake control signals or the electrical energy supply between the towing vehicle and the trailer, the valve switching arrangement (5, 32) has a control terminal (6, 34) which is electrically controllable;

b) the control terminal (6, 34) is connected by way of an electrical line 10 and the monitoring circuit to the electrical signal line (3) and/or to the supply line.

3. A pressure medium brake system according to claim 1, characterized in that the valve switching arrangement (32) has a pressure switch (31) which is able to transfer an electrical signal to the electronic control unit (11) at a predetermined pressure in the pressure medium line (1).

4. A pressure medium brake system according to claim 1, characterized in that the valve switching arrangement (5, 32) has a throttle (22) by which the flow of pressure medium which can be fed from the pressure medium reservoir (13) through the valve switching arrangement (5, 32) to the wheel brake cylinders can be throttled.

5. A pressure medium brake system according to claim 1, characterized in that the valve switching arrangement (5, 32) has a manually operable directional control valve (23), which in a first setting releases a passage from the valve switching arrangement (5, 32) to the wheel brake cylinders and in a second setting connects the wheel brake cylinders to the atmosphere.

6. A pressure medium brake system according to claim 1, characterized in that the valve switching arrangement (32) has a check valve (33) which isolates the supply circuit of the trailer from the supply circuit of the towing vehicle or the atmosphere.

7. A pressure medium brake system according to claim 1, characterized by the following features:

a) the valve switching arrangement (5) has a pneumatic changeover control valve (21) which can be connected to the pressure medium reservoir (13) with a first input by way of a pneumatically controllable directional control valve (9) and with a second input by way of an electrically controllable directional control valve (7);

b) the changeover valve (21) has an input which can be connected to the brake cylinder (19) by way of the manually operable directional control valve (23).

8. A pressure medium brake system according to claim 7, characterized in that, when the control terminal (8) is pressurized, the directional control valve (9) connects the pressure medium supply circuit of the towing vehicle to the pressure medium reservoir (13) and when the control terminal (8) is unpressurized, connects the pressure medium reservoir (13) to the brake cylinder (19).

9. A pressure medium brake system according to claim 1, characterized in that the valve switching arrangement (5) has a directional control valve (7) with the electrical control terminal (6), which valve, when the control terminal (6) is at zero current, connects the pressure medium reservoir (13) to the brake cylinder (19) and when the control terminal (6) is live connects the brake cylinder (19) to the atmosphere.

10. A pressure medium brake system according to claims 3 and 6, characterized in that the valve switching arrangement (32) has a directional control valve (35) with the electrical control terminal (34), which valve, when the control terminal (34) is at zero current, connects the pressure medium reservoir (13) to the brake cylinder (19), and when the control terminal (34) is live, blocks this connection.

**Revendications**

1. Installation de freinage à fluide de pression pour la remorque d'un véhicule, présentant les particularités suivantes:

a) elle comporte un circuit d'alimentation de remorque muni d'un réservoir de fluide de pression (13) et pouvant être relié par une conduite de fluide de pression et un accouplement (2) adéquat au circuit d'alimentation en fluide de pression d'un système de freinage du véhicule;

b) elle comporte un circuit électrique de frein de remorque pouvant être relié par une ligne de signaux électrique (3) et un accouplement (4) adéquat et/ou une ligne d'alimentation électrique et un accouplement adéquat au système de freinage du véhicule tracteur, système qui émet des signaux électriques de freinage;

c) le circuit électrique de frein de remorque comporte une unité de commande électronique (11) pour régler la pression de freinage au moyen d'une vanne de modulation de pression (25) à commande électrique;

d) elle comporte des cylindres de frein (19) coordonnés aux freins de roue et pouvant être détendus à l'atmosphère à travers la vanne de modulation de pression du circuit de frein de la remorque;

e) elle comporte un dispositif de commutation /distribution (5, 32) prévu dans le circuit d'alimentation en fluide de pression de la remorque et pouvant être relié aux cylindres de frein de roue à travers le réservoir de fluide de pression du circuit d'alimentation de la remorque;

f) le dispositif de commutation/distribution peut être relié par la conduite de fluide de pression au circuit d'alimentation en fluide de pression du véhicule tracteur;

g) en cas de séparation entre le système de freinage de la remorque et le circuit d'alimentation en fluide de pression du véhicule tracteur, le dispositif de commutation /distribution relie le réservoir de fluide de pression du circuit d'alimentation de la remorque aux cylindres de frein de roue;
caractérisée en ce que

h) une entrée de commande (6, 34) du dispositif de commutation/distribution (5, 32) est reliée à travers un circuit de surveillance à la ligne de signaux électrique (3) et/ou à la ligne d'alimentation;

i) dans le cas d'une interruption de la ligne de signaux (3), des signaux de freinage et/ou de la ligne d'alimentation, ou dans le cas d'une interruption de l'alimentation électrique, le dispositif de commutation/distribution (5, 32) relie le réservoir (13) en fluide de pression du circuit d'alimentation de la remorque aux cylindres de frein de la remorque.

2. Installation selon la revendication 1, caractérisée en ce que:

a) pour détecter la présence ou l'absence de transmission de signaux électriques de commande de freinage ou d'alimentation électrique entre le véhicule tracteur et la remorque, le dispositif de commutation /distribution (5, 32) présente un raccordement de commande (6, 34) qui est à commande électrique;

b) ce raccordement de commande (6, 34) est relié par une ligne électrique (10) et le circuit de surveillance à la ligne de signaux électrique (3) et/ou à la ligne d'alimentation.

3. Installation selon la revendication 1, caractérisée en ce que le dispositif de commutation /distribution (32) comporte un interrupteur manométrique (31) capable de transmettre un signal électrique à l'unité de commande électronique (11) lorsqu'une pression prédéterminée règne dans la conduite de fluide de pression (1).

4. Installation selon la revendication 1, caractérisée en ce que le dispositif de commutation /distribution (5, 32) comporte un étranglement (22) pour la limitation du courant de fluide de pression susceptible d'être envoyé depuis le réservoir de fluide de pression (13) aux cylindres de frein de roue à travers le dispositif de commutation/distribution (5, 32).

5. Installation selon la revendication 1, caractérisée en ce que le dispositif de commutation /distribution (5, 32) comporte un distributeur (23) à commande manuelle qui, à une première position, établit une communication entre le dispositif de commutation/distribution (5, 32) et les cylindres de frein de roue et qui, à une seconde position, relie les cylindres de frein de roue à l'atmosphère.

6. Installation selon la revendication 1, caractérisée en ce que le dispositif de commutation /distribution (32) comporte un clapet antiretour (33) pour isoler le circuit d'alimentation de la remorque du circuit d'alimentation du véhicule tracteur ou de l'atmosphère.

7. Installation selon la revendication 1, caractérisée en ce que:

a) le dispositif de commutation/distribution (5) comporte une soupape pneumatique de renversement (21) susceptible d'être reliée au réservoir de fluide de pression (13) par une première entrée et à travers un distributeur (9) à commande pneumatique, ainsi que par une seconde entrée et à travers un distributeur (7) à commande électrique;

b) la soupape de renversement (21) présente une sortie susceptible d'être reliée au cylindre de frein (19) à travers le distributeur (23) à commande manuelle.

8. Installation selon la revendication 7, caractérisée en ce que le distributeur (9) relie le circuit d'alimentation en fluide de pression du véhicule tracteur au réservoir de fluide de pression (13) lorsque son raccordement de commande (8) reçoit une pression et qu'il relie le réservoir (13) au cylindre de frein (19) lorsque ce raccordement (8) ne reçoit pas de pression.

9. Installation selon la revendication 1, caractérisée en ce que le dispositif de commutation /distribution (5) comporte un distributeur (7), sur lequel est prévu le raccordement de commande électrique (6), qui relie le réservoir de fluide de pression (13) au cylindre de frein (19) lorsque ce raccordement (6) ne reçoit pas de courant électrique et qui relie le cylindre de frein (19) à l'atmosphère lorsque ce raccordement (6) reçoit du courant.

10. Installation selon les revendications 3 et 6, caractérisée en ce que le dispositif de commutation/distribution (32) comporte un distributeur (35), sur lequel est prévu le raccordement de commande électrique (34), qui relie le réservoir de fluide de pression (13) au cylindre de frein (19) lorsque ce raccordement (34) ne reçoit pas de courant et qui coupe cette liaison lorsque ledit raccordement (34) reçoit du courant.

FIG. 1

ALB      ABS

ELEKTRONIK

4   3

32

11

23    22

31

34

33

35

2

10

1

13

19

FIG. 2